# EUROPEAN PATENT SPECIFICATION

(11) **EP 3 054 671 B1**
(45) Date of publication and mention of the grant of the patent: **19.12.2018**
(21) Application number: 14851027.4
(22) Date of filing: 02.10.2014
(51) Int. Cl.: H04N 5/361, H01L 27/146, H04N 9/04

(54) **IMAGE PICKUP ELEMENT AND IMAGE PICKUP APPARATUS**
BILDERFASSUNGSELEMENT UND BILDERFASSUNGSVORRICHTUNG
ÉLÉMENT DE CAPTURE D'IMAGE ET APPAREIL DE CAPTURE D'IMAGE

(30) Priority: 02.10.2013 JP 2013207367; 02.10.2013 JP 2013207396
(43) Date of publication of application: 10.08.2016
(73) Proprietor: Nikon Corporation, Tokyo 108-6290 (JP)
(72) Inventor: MURATA, Hironobu, Tokyo 100-8331 (JP)
(74) Representative: Viering, Jentschura & Partner mbB Patent- und Rechtsanwälte
(86) International application number: PCT/JP2014/005040
(87) International publication number: WO 2015/049872

(56) References cited:
- JP-A- 2007 194 911
- JP-A- 2010 182 789
- JP-A- 2012 075 179

## Description

### BACKGROUND

### 1. TECHNICAL FIELD

The present invention relates to an imaging element according to the preamble of claim 1 and an imaging apparatus.

### 2. RELATED ART

Conventionally, an optical black region is provided in a region that is adjacent to the effective pixel region of an imaging element and different from this effective pixel region, as shown in Patent Document 1, for example. Furthermore, there has been a proposal to provide at least one optical black pixel within the effective pixel region, as shown in Patent Document 2, for example.
Patent Document 1: Japanese Patent Application Publication No. 2012-124213
Patent Document 2: Japanese Patent Application Publication No. 2013-118573

JP 2007-194911 A discloses an imaging element according to the initially-mentioned type.

However, when an optical black region is provided in a region differing from the effective pixel region, the surface area of the imaging element becomes larger. Furthermore, the position of the pixel reading the pixel signal and the position of the optical black region are spatially distanced from each other, and therefore when reading the pixel signal using the block division method, the problems described below are encountered.

First of all, there is a problem that a difference occurs between the output reference level of the optical black region and the output reference level to be detected at the position of the pixel reading the pixel signal. Furthermore, when changing the charge accumulation time for each block, there is a problem that it is necessary to correct the output reference level of the optical black region according to the change of the charge accumulation time and use this corrected level as the output reference level.

### SUMMARY

The present invention provides an imaging element according to claim 1 and an imaging apparatus according to claim 9. Further embodiments of the present invention are described in the dependent claims.

The summary clause does not necessarily describe all necessary features of the embodiments of the present invention. The present invention may also be a subcombination of the features described above.

### BRIEF DESCRIPTION OF THE DRAWINGS

Fig. 1 is a cross-sectional view of the single-lens reflex camera 400.
Fig. 2 is a diagram showing a photoelectric converting region 11 of an imaging element 10 according to a first embodiment and a partial region 14 of the photoelectric converting region 11.
Fig. 3 is a schematic circuit view of a portion of the pixel region 24-1, a portion of the image processing ASIC 624, and a portion of the CPU 622.
Fig. 4 is a schematic view of the pixel region 24-1 in Fig. 3.
Fig. 5A is an enlarged view of the pixel region 30.
Fig. 5B is a schematic view of pixels 20-3 having the third spectral characteristic, a pixel 20-2 having the second spectral characteristic, and a correction pixel 22-2 in the B-B cross section.
Fig. 6 shows a partial region 14 of the photoelectric converting region 11 according to a second embodiment.
Fig. 7 shows a partial region 14 of the photoelectric converting region 11 according to a third embodiment.
Fig. 8 shows the photoelectric converting region 111 of an imaging element 110 and the partial region 114 of a pixel block 112 according to a fourth embodiment.
Fig. 9 is a schematic view of a portion of an imaging element section 200, a portion of the image processing ASIC 624, and a portion of the CPU 622.
Fig. 10 is a timing chart showing the operation of a pixel block 112.
Fig. 11 shows the partial region 114 of a pixel block 112 according to a fifth embodiment.
Fig. 12 shows the partial region 114 of a pixel block 112 according to a sixth embodiment.
Fig. 13 shows the partial region 114 of a pixel block 112 according to a seventh embodiment.
Fig. 14A is an enlarged view of the region 130.
Fig. 14B is a schematic view of the correction pixels 124 and correction pixels 126 in the B-B cross section.

### DESCRIPTION OF EXEMPLARY EMBODIMENTS

Hereinafter, some embodiments of the present invention will be described. The embodiments do not limit the invention according to the claims, and all the combinations of the features described in the embodiments are not necessarily essential to means provided by aspects of the invention.

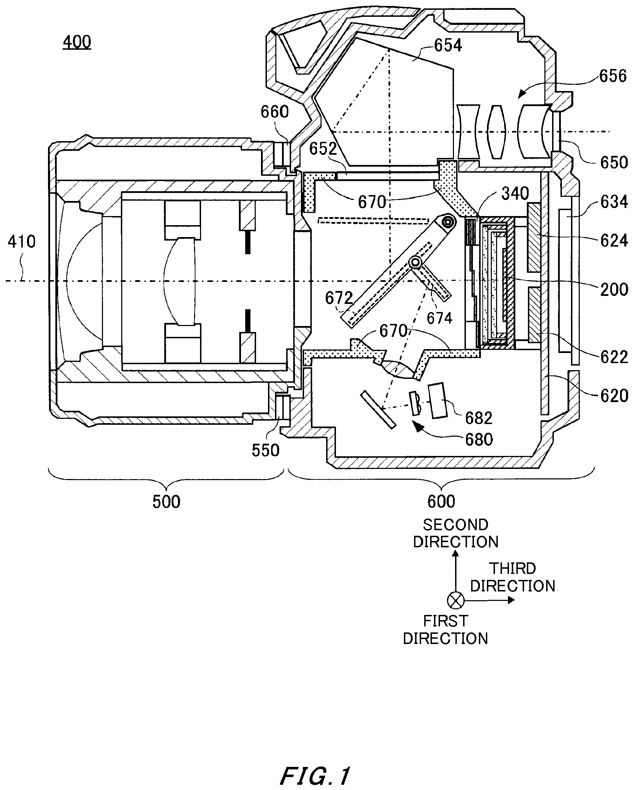

Fig. 1 is a cross-sectional view of a single-lens reflex camera 400. The single-lens reflex camera 400, which serves as an imaging apparatus, includes an imaging element section 200. The imaging element section 200 includes an imaging element. The single-lens reflex camera 400 also includes a lens unit 500 and a camera body 600. The lens unit 500 is attached to the camera body 600. The lens unit 500 includes an optical system arranged along an optical axis 410 within a lens barrel thereof, and guides a subject light beam incident thereto to the imaging element section 200 of the camera body 600.

In the present Specification, a first direction and a second direction are perpendicular to each other. The first direction may be a direction of the columns of the imaging element in the imaging element section 200, and the second direction may be a direction of the rows of the imaging element in the imaging element section 200. Furthermore, the first direction may be a so-called x direction of the imaging element and the second direction may be a so-called y direction of the imaging element. Yet further, the first direction may be interpreted as the vertical direction of the imaging element and the second direction may be interpreted as the horizontal direction of the imaging element. A third direction is a direction that is perpendicular to the plane defined by the first direction and the second direction. The third direction is parallel to the optical axis 410. The third direction may be interpreted as the z direction.

The camera body 600 includes a main mirror 672 and a sub mirror 674 behind the body mount 660 connected to the lens mount 550. The main mirror 672 is supported in a manner to be pivotable between an inclined position where the main mirror 672 is inclined relative to the incident subject light beam from the lens unit 500 and a withdrawn position where the main mirror 672 is withdrawn from the path of the subject light beam. The sub mirror 674 is supported in a manner to be pivotable relative to the main mirror 672.

When the main mirror 672 is at the inclined position, the majority of the incident subject light beam passed through the lens unit 500 is reflected by the main mirror 672 and guided to the focusing screen 652. The focusing screen 652 is arranged at a position conjugate to the light receiving surface of the imaging element, and causes the subject image formed by the optical system of the lens unit 500 to be visible. The subject image formed on the focusing screen 652 is viewed from the finder 650 through the pentaprism 654 and the finder optical system 656. A portion of the subject light beam incident to the main mirror 672 at the inclined position transparently passes through the half mirror region of the main mirror 672 to be incident to the sub mirror 674. The sub mirror 674 reflects the portion of the incident light beam from the half mirror region toward the focusing optical system 680. The focusing optical system 680 guides a portion of the incident light beam to the focal point detection sensor 682.

In this example, a phase difference autofocus method was adopted. However, when adopting an image surface phase difference autofocus method, the sub mirror 674, the focusing optical system 680, and the focal point detection sensor 682 can be omitted. As a result, the volume of the camera body 600 can be decreased compared to a case where the phase difference autofocus method is adopted.

The focusing screen 652, the pentaprism 654, the main mirror 672, and the sub mirror 674 are supported by the mirror box 670 serving as a structural body. The imaging element section 200 is attached to the mirror box 670. When the main mirror 672 and the sub mirror 674 are at the withdrawn position and the front curtain and the back curtain of the shutter unit 340 are in an open state, the subject light transparently passed by the lens unit 500 reaches the light receiving surface of the imaging element.

A body substrate 620 and a back surface display section 634 are arranged behind the imaging element section 200 in the stated order. The back surface display section 634, which is a liquid crystal panel or the like, is provided on the back surface of the camera body 600. Electronic circuits such as a CPU 622 and an image processing ASIC 624 are implemented on the body substrate 620. The output of the imaging element is transferred to the image processing ASIC 624 via a flexible substrate electrically connected to the glass substrate described above.

In the present embodiment, the single-lens reflex camera 400 is described as an example of the imaging apparatus, but the camera body 600 may also be treated as an imaging apparatus. Furthermore, the imaging apparatus is not limited to a camera with an interchangeable lens including a mirror unit, and may be a camera with an interchangeable lens that does not include a mirror unit or a camera with an integrated lens that does or does not include a mirror unit.

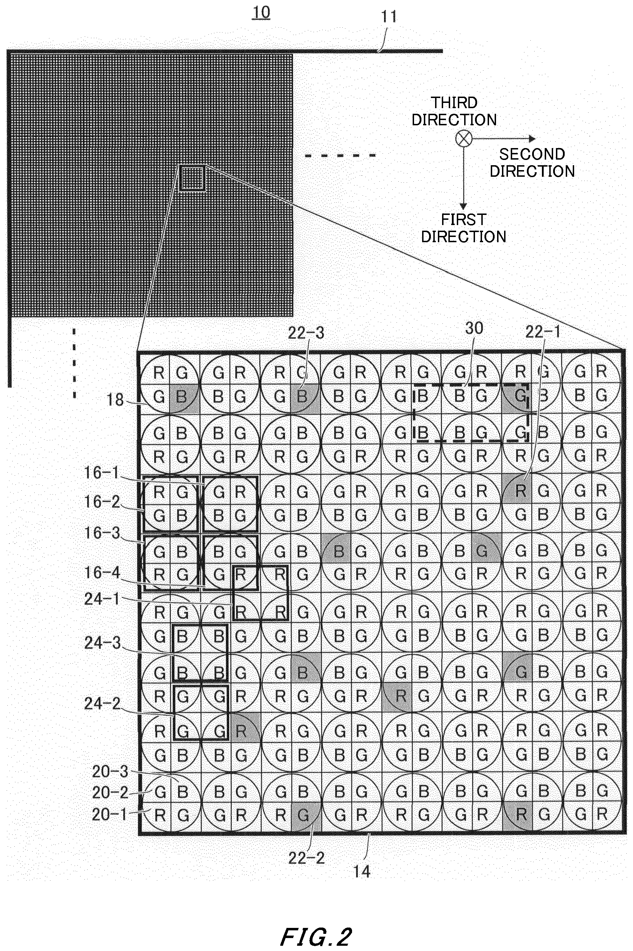

Fig. 2 is a diagram showing a photoelectric converting region 11 of an imaging element 10 according to a first embodiment and a partial region 14 of the photoelectric converting region 11. The imaging element 10 includes a photoelectric converting region 11. The photoelectric converting region 11 includes a plurality of microlenses 18, a plurality of pixels 20, and a correction pixel 22. The four pixels 20 or the set of three pixels 20 and one correction pixel 22 provided to correspond to one microlens 18 are a pixel unit 16. Furthermore, the four pixels 20 or the set of three pixels 20 and one correction pixel 22 that have the same optical characteristics are a pixel region 24. The pixel region 30 is described below with reference to the drawings.

Each microlens 18 focuses light incident to the photoelectric converting region 11 on a pixel 20. The microlenses 18 are arranged in the first direction and the second direction that is perpendicular to the first direction. In this example, the microlenses 18 are provided in a matrix within a plane defined by the first direction and the second direction. Furthermore, a plurality of pixels 20 are provided corresponding respectively to the plurality of microlenses 18. In this example, four pixels correspond to each microlens 18, and the four pixels are arranged in a 2×2 formation in the first direction and the second direction. In other words, four pixels in a matrix formation correspond to one microlens 18.

The pixels 20 are an example of pixels that generate image data by photoelectrically converting the light incident thereto. Each pixel 20 includes a filter having a predetermined spectral characteristic and a photoelectric converting section. In the pixel 20, the photoelectric converting section photoelectrically converts the light incident thereto via the filter. The shape of the photoelectric converting section in a plane defined by the first direction and the second direction may be a square from which one corner has been chamfered, for example, in a manner to receive light incident from the third direction via the microlens 18.

In the present Specification, the plurality of pixels 20 include a pixel 20-1 with a first spectral characteristic that includes a photoelectric converting section for photoelectrically converting light incident thereto via a first filter having the first spectral characteristic, a pixel 20-2 with a second spectral characteristic that includes a photoelectric converting section for photoelectrically converting light incident thereto via a second filter having the second spectral characteristic, and a pixel 20-3 with a third spectral characteristic that includes a photoelectric converting section for photoelectrically converting light incident thereto via a third filter having the third spectral characteristic. The first, second, and third spectral characteristics may respectively be red, blue, and green. In this example, the pixel 20-1 having the first spectral characteristic has a red (R) filter, the pixel 20-2 having the second spectral characteristic has a green (G) filter, and the pixel 20-3 having the third spectral characteristic has a blue (B) filter.

A pixel having the first spectral characteristic and a pixel having the third spectral characteristic are provided along one diagonal in the set of four pixels. Furthermore, two pixels having the second spectral characteristic are provided along the other diagonal in the set of four pixels. In this example, the pixel 20-1 (R) having the first spectral characteristic and the pixel 20-3 (B) having the third spectral characteristic are provided on the one diagonal, and the two pixels 20-2 (G) having the second spectral characteristic are provided on the other diagonal.

The arrangement of four pixels 20 corresponding to one microlens 18 has mirror symmetry with the arrangement of four pixels 20 corresponding to a microlens 18 adjacent in the first direction. Furthermore, the arrangement of four pixels 20 corresponding to one microlens 18 has mirror symmetry with the arrangement of four pixels 20 corresponding to a microlens 18 adjacent in the second direction.

In other words, in this example, for a pixel unit 16-1 and a pixel unit 16-2, there is mirror symmetry relative to a straight line parallel to the first direction between the pixel unit 16-1 and the pixel unit 16-2. Similarly, for the pixel unit 16-1 and a pixel unit 16-4, there is mirror symmetry relative to a straight line parallel to the second direction between the pixel unit 16-1 and the pixel unit 16-4. A pixel unit 16-3 also has mirror symmetry with respect to the pixel unit 16-2 and the pixel unit 16-4.

As a result, the pixels 20-1 having the first spectral characteristic, the pixels 20-2 having the second spectral characteristic, and the pixels 20-3 having the third spectral characteristic are each arranged adjacent to pixels having the same spectral characteristic provided to correspond to the adjacent microlenses 18. Among the pixel units 16-1, 16-2, 16-3, and 16-4, the four pixels 20-3 having the third spectral characteristic provided to correspond to the four adjacent microlenses 18 are arranged adjacent to each other.

With the pixels units 16-1, 16-2, 16-3, and 16-4 as the origin, four pixels 20-2 having the second spectral characteristic and four pixels 20-3 having the third spectral characteristic are repeatedly arranged in the first direction. Furthermore, with the pixels units 16-1, 16-2, 16-3, and 16-4 as the origin, four pixels 20-2 having the second spectral characteristic and four pixels 20-3 having the third spectral characteristic are repeatedly arranged in the second direction as well.

With the four pixels 20-1 having the first spectral characteristic, i.e. the pixel region 24-1, as the origin, four pixels 20-2 having the second spectral characteristic and four pixels 20-1 having the first spectral characteristic are repeatedly arranged in the first direction. Furthermore, with the four pixels 20-1 having the first spectral characteristic, i.e. the pixel region 24-1, as the origin, four pixels 20-2 having the second spectral characteristic and four pixels 20-3 having the third spectral characteristic are repeatedly arranged in the first direction. In other words, the photoelectric converting region 11 is filled with sets of four pixels 20-1 having the first spectral characteristics and red (R) filters, i.e. pixel regions 24-1, sets of four pixels 20-2 having the second spectral characteristics and green (G) filters, i.e. pixel regions 24-2, and sets of four pixels 20-3 having the third spectral characteristics and blue (B) filters, i.e. pixel regions 24-3.

A correction pixel 22 is provided in a manner to replace one of the pixels 20 for at least one of the microlenses 18. The correction pixel 22 generates a voltage reference level that does not depend on the amount of incident light. For example, the correction pixel 22 has a structure creating a short circuit between the input end and the output end of the photoelectric converting section of the pixel 20. The correction pixel 22 may include a light blocking layer between the filter and the photoelectric converting section of the pixel 20. This light blocking layer is different from the light blocking layer for the so-called image surface phase difference. The light blocking layer is provided in order to block all of the light incident to the correction pixel 22.

By providing the correction pixel 22, it is possible to detect the dark current generated by the imaging element 10. The dark current is noise generated due to the charge accumulation time or the heat of the imaging element 10, for example. By subtracting the signal value output from the correction pixel 22 from the signal value output from the pixel 20, it is possible to remove the effect of noise current.

In this example, correction pixels 22 are arranged in a manner to satisfy the following two conditions. The first condition is that correction pixels 22 are not adjacent to each other in two adjacent microlenses 18 among the plurality of microlenses 18. The second condition is that only one pixel among pixels having the same spectral characteristic and arranged adjacent to each other is a correction pixel 22. In this example, in the pixel unit 16-4, one pixel among the four pixels 20-1 having the first spectral characteristic and arranged in the center may be a correction pixel 22-1.

In the present example, a plurality of correction pixels 22 are provided independently in the photoelectric converting region 11, in a manner to satisfy the two conditions described above. Therefore, compared to a case in which the optical black region is provided in a region that is near the photoelectric converting region 11 and different from the photoelectric converting region 11, the surface area of the imaging element 10 can be decreased. In addition, the correction pixels 22 are spread out in a manner to satisfy the two conditions described above, and therefore, compared to a case where the optical black region is provided in a specified region of the photoelectric converting region 11, there is a higher probability of a correction pixel 22 being present near each pixel 20 among the pixels 20 throughout the entire photoelectric converting region 11. Therefore, the correction pixels 22 can more accurately detect the dark current of the pixels 20.

The regions obtained by dividing a microlens 18 into four regions in the first direction and the second direction are referred to as first to fourth quadrants. In the partial region 14 of this example, the correction pixels 22 are arranged uniformly among the first to fourth quadrants. Furthermore, the colors of the color filters for which the correction pixels 22 are provided are distributed uniformly. As a result, even when the incident light is not telecentric, it is possible to prevent a case where none of the incident light is incident to the correction pixels 22 and a case where the light incident to a pixel 20 decreases as the result of the incident light being disproportionally incident to the correction pixels 22.

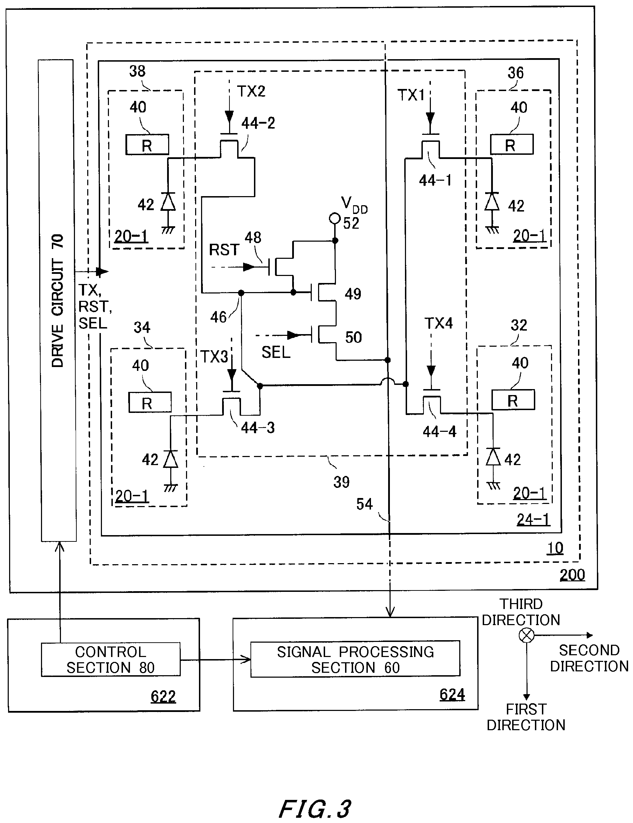

Fig. 3 is a schematic circuit view of a portion of the pixel region 24-1, a portion of the image processing ASIC 624, and a portion of the CPU 622. The imaging element section 200 includes an imaging element 10 and a drive circuit 70. The image processing ASIC 624 includes a signal processing section 60. The CPU 622 includes a control section 80. In this example, the description focuses on the four pixels 20-1 (pixel region 24-1) having the first spectral characteristic and the red (R) filters in the photoelectric converting region 11 of the imaging element 10.

In the pixel region 24-1, four pixels 20-1 having the same first spectral characteristic are arranged adjacent to each other. The four pixels 20-1 having the first spectral characteristics are pixels 20-1 having the first spectral characteristic provided to correspond to a plurality of microlenses 18 adjacent to each other. The four pixels 20-1 having the first spectral characteristic correspond respectively to a first quadrant pixel 32, a second quadrant pixel 34, a third quadrant pixel 36, and a fourth quadrant pixel 38.

The pixel region 24-1 includes a circuit section 39. The circuit section 39 includes pixels 20, transferring sections 44, a charge/voltage converting section 46, a charge expelling section 48, an amplifying section 49, an output section 50, a high potential section 52, and a signal line 54. Each pixel 20-1 having the first spectral characteristic includes a color filter 40 and a photoelectric converting section 42.

A red (R) color filter 40 is provided near the photoelectric converting section 42. The photoelectric converting section 42 generates a charge according to the amount of light incident thereto via the red (R) color filter 40. The photoelectric converting section 42 accumulates charge obtained as the result of a photoelectric conversion. The accumulated charge is electrons, for example.

Each transferring section 44 is provided between a photoelectric converting section 42 and the charge/voltage converting section 46. The transferring section 44 is a transistor having a gate, a source, and a drain, for example. When a control signal TX is provided to the gate of the transferring section 44 from the drive circuit 70, the transferring section 44 transmits the charge accumulated by the photoelectric converting section 42 to the charge/voltage converting section 46.

The charge expelling section 48 is provided between the high potential section 52 and the charge/voltage converting section 46. In this example, the charge expelling section 48 is a transistor having a gate, a source, and a drain. When a control signal RST is provided to the gate of the charge expelling section 48 from the drive circuit 70, the charge expelling section 48 sets the potential of the charge/voltage converting section 46 to be a potential approximately the same as the potential of the high potential section 52. In this example, the charge expelling section 48 expels the electrons accumulated by the charge/voltage converting section 46.

The amplifying section 49 is provided between the output section 50 and the high potential section 52. In this example, the amplifying section 49 is a transistor having a gate, a source, and a drain. The gate of the amplifying section 49 is electrically connected to the charge/voltage converting section 46. As a result, the amplifying section 49 outputs current to the output section 50 via a voltage obtained by amplifying the voltage of the charge/voltage converting section 46.

The output section 50 is provided between the amplifying section 49 and the signal line 54. In this example, the output section 50 is a transistor having a gate, a source, and a drain. When a control signal SEL is provided to the gate of the output section 50 from the drive circuit 70, the output section 50 outputs current to the signal line 54 via the voltage resulting from the amplification performed by the amplifying section 49. In this way, a signal corresponding to the voltage of the charge/voltage converting section 46 that has been amplified is output as a signal to the signal line 54.

The high potential section 52 is electrically connected to the power supply voltage V_{DD}. The high potential section 52 supplies a high potential to the charge expelling section 48 and the amplifying section 49. This high potential may be any potential that enables performance of the charge expelling operation of the charge expelling section 48 and the amplifying operation of the amplifying section 49.

The charge/voltage converting section 46 receives the charge accumulated by each photoelectric converting section 42 and converts the charge into a potential. In this example, among the four adjacent pixels 20-1 having the first spectral characteristic, the charge/voltage converting section 46 is shared by four pixels. In other words, the output of each of the transferring sections 44-1, 44-2, 44-3, and 44-4 is electrically connected to the charge/voltage converting section 46.

The charge transferred from the transferring sections 44 is accumulated in the charge/voltage converting section 46. In this example, the charge/voltage converting section 46 is a so-called floating diffusion region. The charge/voltage converting section 46 may be a capacitor that has one end electrically connected to the outputs of the transferring sections 44 and the other end grounded. The charge transferred from the transferring sections 44 is accumulated at the other end of the charge/voltage converting section 46. As a result, the accumulated charge is converted into a potential by the charge/voltage converting section 46. The potential of the gate of the amplifying section 49 is equal to the potential at the one end of the charge/voltage converting section 46.

A signal is output to the signal line 54 from each output section 50. The signal line 54 is connected to the signal processing section 60 via a CDS circuit and an AD conversion circuit, for example.

A signal corresponding to the charge amount resulting from the photoelectric conversion by each pixel 20 is output to the signal processing section 60. Furthermore, a signal corresponding to the dark current detected by the correction pixel 22 is output to the signal processing section 60. The signal processing section 60 uses the signal corresponding to the dark current as the voltage reference level. Using the voltage reference level generated by the correction pixel 22 as correction data, the signal processing section 60 corrects the pixel value or the signal output from at least one pixel among the pixel 20-1 having the first spectral characteristic, the pixel 20-2 having the second spectral characteristic, and the pixel 20-3 having the third spectral characteristic.

Using the signals output from at least two pixels among the pixel 20-1 having the first spectral characteristic, the pixel 20-2 having the second spectral characteristic, and the pixel 20-3 having the third spectral characteristic adjacent to each correction pixel 22, the signal processing section 60 generates the signal at the position of the correction pixel 22 through interpolation. The interpolation method used by the signal processing section 60 may be an interpolation method according to a median process, an interpolation method based on the gradient, or an adaptive color plane interpolation method.

The drive circuit 70 supplies a signal pulse to the gates of the transferring sections 44, the charge expelling section 48, and the output section 50. In this way, the transistors of the transferring sections 44, the charge expelling section 48, and the output section 50 are turned ON.

The control section 80 controls the drive circuit 70. Specifically, the control section 80 controls the transferring sections 44, the charge expelling section 48, and the output section 50 by controlling the timing at which the pulse is supplied to the gates of the transferring sections 44, the charge expelling section 48, and the output section 50. The control section 80 also controls operation of the signal processing section 60.

With the circuit configuration of Fig. 3, it is possible for the drive circuit 70 to individually read the charge accumulated in each photoelectric converting section 42. In addition to this, the drive circuit 70 can read the charge after the charges of four photoelectric converting section 42 have been added together by the charge/voltage converting section 46. Accordingly, the drive circuit 70 can selectively perform one of reading the charges independently and reading the summed result of the charges.

As a modification, instead of the four pixels 20-1 having the first spectral characteristics and red (R) filters, i.e. the pixel region 24-1, the charge/voltage converting section 46 may be provided in common to a pixel unit 16 including one pixel 20-1 having the first spectral characteristic, two pixels 20-2 having the second spectral characteristic, and one pixel 20-3 having the third spectral characteristic, provided to correspond to at least one microlens 18. In this case, by adjusting the control signals TX1 to TX4 for the respective transferring sections 44, the control signal RST for the charge expelling section 48, and the control signal SEL for the output section 50, the drive circuit 70 can prevent the respective charges of the pixels 20 from mixing together in the charge/voltage converting section 46.

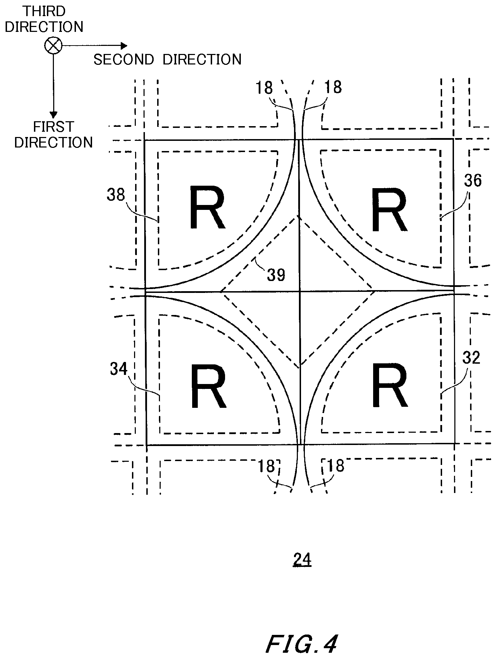

Fig. 4 is a schematic view of the pixel region 24-1 in Fig. 3. As described above in relation to Fig. 3, the pixel region 24-1 includes the first quadrant pixel 32, the second quadrant pixel 34, the third quadrant pixel 36, the fourth quadrant pixel 38, and the circuit section 39. The first quadrant pixel 32, the second quadrant pixel 34, the third quadrant pixel 36, and the fourth quadrant pixel 38 are provided in a manner to surround the circuit section 39. In this way, it is possible to provide the circuit section 39 at a position where the photoelectric converting section 42 is not provided. Accordingly, the surface area of the photoelectric converting section 42 is not infringed upon by the circuit section 39 within a plane defined by the first direction and the second direction. Therefore, it is possible to maximize the surface area of the photoelectric converting section 42.

In this example, the set of the first quadrant pixel 32 and the third quadrant pixel 36 and the set of the second quadrant pixel 34 and the fourth quadrant pixel 38 can be used as pixels for the image surface phase difference autofocus in the first direction. Similarly, the set of the first quadrant pixel 32 and the second quadrant pixel 34 and the set of the third quadrant pixel 36 and the fourth quadrant pixel 38 can be used as pixels for the image surface phase difference autofocus in the second direction.

As a result, there is no need to divide one photoelectric converting section 42 to realize the image surface phase difference autofocus. Therefore, there is no need to provide the light blocking layer, which is used to divide the photoelectric converting section 42. Accordingly, compared to a case where the photoelectric converting section 42 is divided, the surface area of the photoelectric converting section 42 in the plane defined by the first direction and the second direction can be increased. Furthermore, compared to a case where the photoelectric converting section 42 is divided, the manufacturing process of the photoelectric converting section can be made simpler.

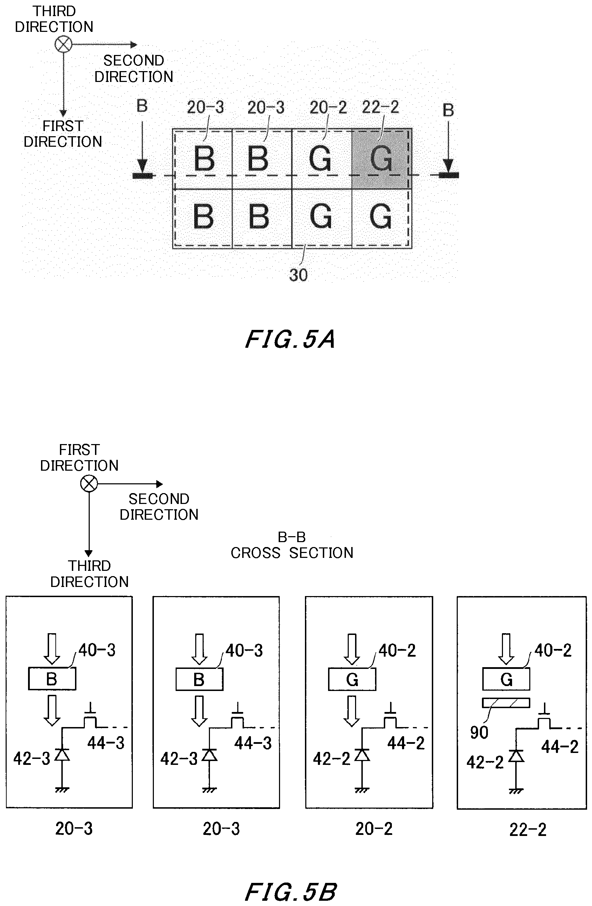

Fig. 5A is an enlarged view of the pixel region 30. The pixel region 30 includes pixels 20-2 having the second spectral characteristic and green (G) filters and pixels 20-3 having the third spectral characteristic and blue (B) filters. Furthermore, the pixel region 30 includes a correction pixel 22-2. A position cleaving the imaging element 10 parallel to the second direction through two pixels 20-3 having the third spectral characteristic, one pixel 20-2 having the second spectral characteristic, and one correction pixel 22-2 is shown by B-B.

Fig. 5B is a schematic view of pixels 20-3 having the third spectral characteristic, a pixel 20-2 having the second spectral characteristic, and a correction pixel 22-2 in the B-B cross section. The correction pixel 22-2 includes a light blocking layer 90 between the color filter 40-2 and the photoelectric converting section 42-2. As described above, the light blocking layer 90 is provided in order to block all of the light incident to the photoelectric converting section 42-2 of the correction pixel 22-2. Instead of providing the light blocking layer 90, a short circuit may be formed between the ground and a position between the photoelectric converting section 42-2 and the transferring section 44-2.

Other than providing the light blocking layer 90 or forming the short circuit between the ground and a position between the photoelectric converting section 42-2 and the transferring section 44-2, the transferring sections 44, the charge/voltage converting section 46, the charge expelling section 48, the amplifying section 49, the output section 50, the high potential section 52, and the signal line 54 described in Fig. 3 are provided in the same manner as the example of Fig. 3. The dark current can be detected using the correction pixels 22.

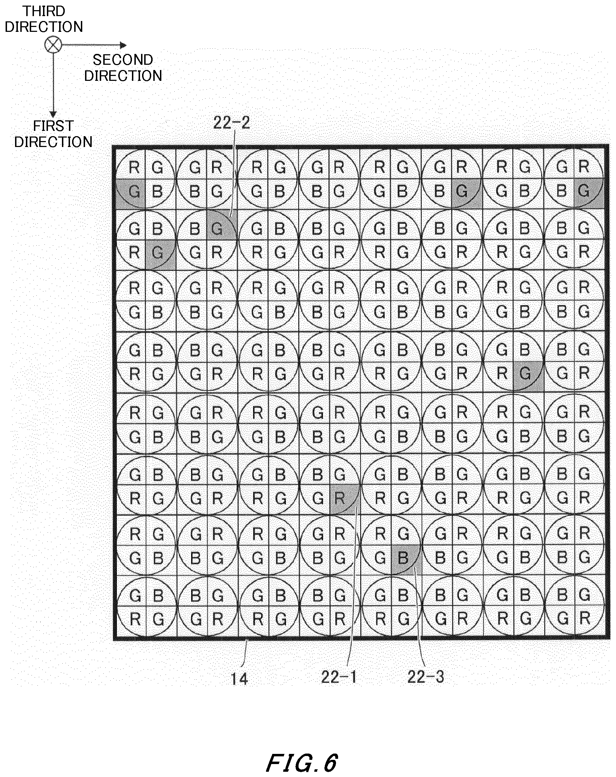

Fig. 6 shows a partial region 14 of the photoelectric converting region 11 according to a second embodiment. The partial region 14 includes a plurality of correction pixels 22. In the partial region 14, each correction pixel 22 is arranged at a random position satisfying the two conditions described further above. Fig. 6 shows a correction pixel 22-1 as a correction pixel 22 having a red filter, a correction pixel 22-2 as a correction pixel 22 having a green filter, and a correction pixel 22-3 as a correction pixel 22 having a blue filter in the partial region 14.

The pattern of the randomly arranged correction pixels 22 is preferably random throughout the entire photoelectric converting region 11. In this way, it is possible to restrict alias signals generated when the arrangement pattern of the correction pixels 22 is provided periodically.

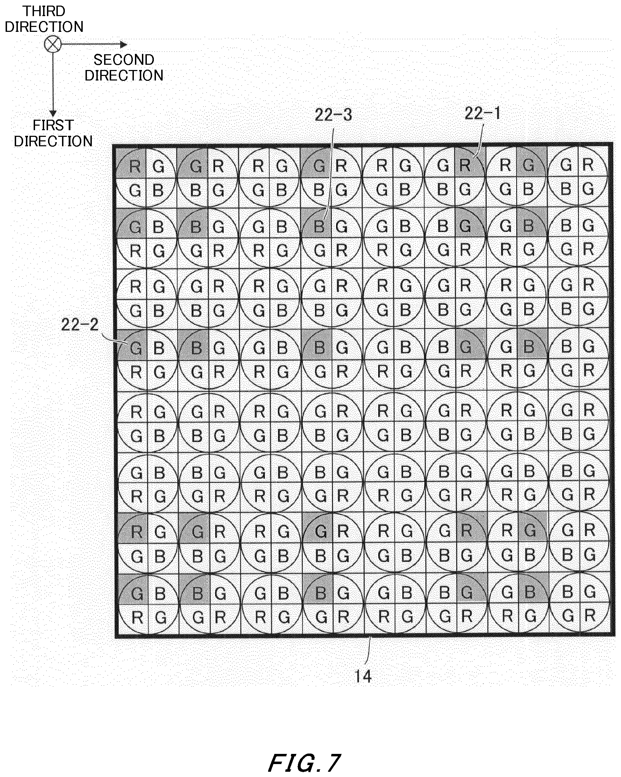

Fig. 7 shows a partial region 14 of the photoelectric converting region 11 according to a third embodiment. The partial region 14 includes a plurality of correction pixels 22. In the partial region 14, a plurality of correction pixels 22 are arranged along a plurality of lines parallel to the first direction and a plurality of correction pixels 22 are arranged along a plurality of lines parallel to the second direction.

The intervals between the lines parallel to the first direction on which the correction pixels 22 are arranged are not constant, and the intervals between the lines parallel to the second direction on which the correction pixels 22 are arranged are not constant. In this example, the correction pixels 22 at intervals of 1, 3, and 5 pixels, 1, 3, and 5 pixels, 1, 3, and 5 pixels, etc. in the first direction. Furthermore, the correction pixels 22 are arranged at intervals of 1, 2, and 4 pixels, 1, 2, and 4 pixels, 1, 2, and 4 pixels, etc. in the second direction.

The arrangement pattern of the correction pixels 22 in the partial region 14 may be used throughout the entire photoelectric converting region 11 of the imaging element 10. When the correction pixels 22 are arranged according to a specified pattern, alias signals will definitely be generated. However, in Fig. 7, by providing an arrangement pattern for the correction pixels 22 that does not have constant intervals, as described above, throughout the entire photoelectric converting region 11, compared to a case where an arrangement pattern with the same intervals is provided throughout the entire photoelectric converting region 11, it is possible to restrict the strength of the generated alias signals.

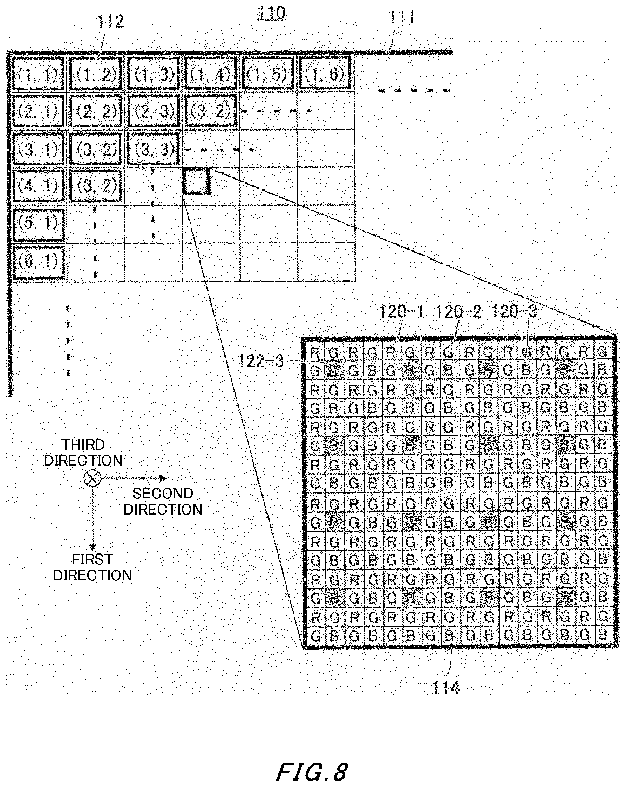

Fig. 8 shows the photoelectric converting region 111 of an imaging element 110 and the partial region 114 of a pixel block 112 according to a fourth embodiment. The imaging element 110 includes a photoelectric converting region 111. The photoelectric converting region 111 includes one or more pixel blocks 112.

In Fig. 8, a plurality of pixel blocks 112 are indicated with a coordinate display using the first direction and the second direction. In this example, for at least two of the pixel blocks 112, signals may be read independently for each pixel block 112. The signals generated as a result of the photoelectric conversions by the pixel blocks 112 are read independently from each other for each pixel block 112. In other words, the signals generated by the pixel blocks 112 are read for each pixel block 112, using a so-called block division reading method. Among the plurality of pixel blocks 112, at least two of the pixel blocks 112 (referred to as a first pixel block 112 and a second pixel block 112) can perform the imaging operation using different imaging conditions. Here, the imaging conditions include at least one of the exposure time, the ISO sensitivity, and the frame rate, for example.

The photoelectric converting region 111 includes a plurality of pixels 120 and a plurality of correction pixels 122. The plurality of pixels 120 include first pixels that generate first image data by performing an imaging operation with a first imaging condition and second pixels that generate second image data by performing an imaging operation with a second imaging condition that is different from the first imaging condition. In this example, the pixels 120 included in the first pixel block 112 that performs the imaging operation with the first imaging condition are an example of the first pixels, and the pixels 120 included in the second pixel block 112 that performs the imaging operation with the second imaging condition are an example of the second pixels. Furthermore, the plurality of correction pixels 122 includes first correction pixels that generate first correction data used to eliminate the noise included in the first image data by performing the imaging operation with the first imaging condition and second correction pixels that generate second correction data used to eliminate the noise included in the second image data by performing the imaging operation with the second imaging condition. In this example, the correction pixels 122 included in the first pixel block 112 are an example of the first correction pixels, and the correction pixels 122 included in the second pixel block 112 are an example of the second correction pixels. The correction data may be data indicating the voltage reference level, which is described further below. The portion of the pixel block 112 that is enlarged is the partial region 114. A photoelectric converting section is arranged in each pixel 120. The photoelectric converting section accumulates the charge resulting from the photoelectric conversion according to the amount of light incident to the photoelectric converting region 111.

One pixel 120 includes one photoelectric converting section and a filter having a predetermined spectral characteristic. It should be noted that when detecting the focal point using the image surface phase difference autofocus method, one pixel 120 is divided into a plurality of photoelectric converting sections. Specifically, when using the image surface phase difference autofocus method, each pixel 120 includes a plurality of photoelectric converting section having less surface area in the plane defined by the first direction and the second direction than a photoelectric converting section that does not perform focal point detection.

In the photoelectric converting region 111, pixels 120 having red filters are set as pixels 120-1 (or simply R pixels), pixels 120 having green filters are set as pixels 120-2 (or simply G filters), and pixels 120 having blue filters are set as pixels 120-3 (or simply B filters) and arranged in a Bayer pattern. It should be noted that the filter colors are merely an example. So-called cyan, magenta, and yellow colors may be used instead, for example. Furthermore, instead of the Bayer pattern, the pixels 120-1, 120-2, and 120-3 may be arranged in a striped pattern.

Each pixel block 112 includes at least one correction pixel 122. The at least one correction pixel 122 generates a voltage reference level that does not depend on the amount of light incident to the photoelectric converting region 111. In this example, each correction pixel 122 may include a light blocking layer between the filter and the photoelectric converting section. The light blocking layer is different from the light blocking layer for the so-called image surface phase difference. The light blocking layer is provided in order to block all of the light incident to the correction pixel 122.

By providing the correction pixel 122, it is possible to detect the dark current generated by the imaging element 110. The dark current is noise generated due to the charge accumulation time or the heat of the imaging element 110, for example. By subtracting the signal value output from the correction pixel 122 from the signal value output from the pixel 120, it is possible to remove the effect of noise current.

In this example, each pixel block 112 includes at least one correction pixel 122. Therefore, compared to a case where the pixel block 112 is spatially distanced from the optical black region or the correction pixel 122 or a case where there are no correction pixels 122 in the pixel blocks 112, the pixels 120 are provided closer to the correction pixels 122. As a result, the correction pixels 122 can more accurately detect the dark current of the pixels 120.

With the block division reading method, there are cases where the charge accumulation time changes for each pixel block 112. In such cases as well, the correction pixels 122 are provided within the pixel blocks 112, and therefore it is possible for the correction pixels 122 to detect the dark current in each pixel block 112 according to the change in the charge accumulation time. Accordingly, it is possible to accurately eliminate the effect of the dark current for each pixel block 112.

A B pixel functioning as a correction pixel 122 is a correction pixels 122-3. In this example, the correction pixels 122-3 are arranged at intervals of three pixels in both the first direction and the second direction in the pixel block 112. One row of the correction pixels 122-3 arranged in the second direction may be set as a light blocking line. A plurality of such light blocking lines are provided in the pixel block 112.

Furthermore, pixels 120-1 and 120-2 in one row in the second direction in which the pixels 120-1 and 120-2 are arranged may be phase difference detection pixels. In other words, one row in the second direction in which the pixels 120-1 and 120-2 are arranged may be a focal point detection line used for the image surface phase difference autofocus. A plurality of such focal point detection lines may be provided in the pixel block 112.

As a modification, it is acceptable for just a plurality of R pixels to be the correction pixels 122. When the R pixels are the correction pixels 122, one line in the second direction in which the correction pixels 122 are arranged is set as a light blocking line. A plurality of such light blocking lines may be provided in the pixel block 112. Furthermore, in one row in the second direction in which the pixels 120-2 and 120-3 are arranged, the pixels 120-2 or 120-3 may be phase difference detection pixels. In other words, one row in the second direction in which the pixels 120-2 and 120-3 are arranged may be a focal point detection line used for the image surface phase difference autofocus. A plurality of such focal point detection lines may be provided in the pixel block 112.

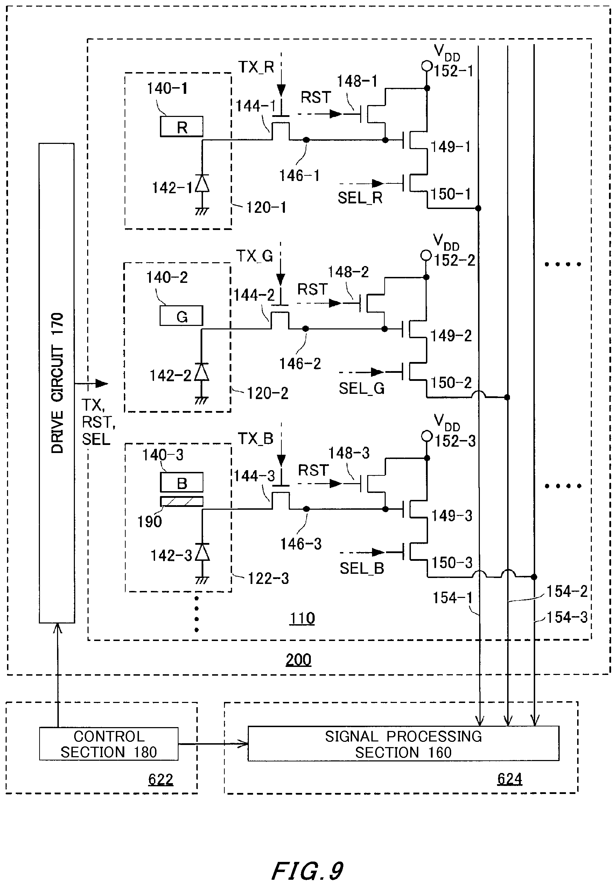

Fig. 9 is a schematic view of a portion of an imaging element section 200, a portion of the image processing ASIC 624, and a portion of the CPU 622. The imaging element section 200 includes an imaging element 110 and a drive circuit 170. The image processing ASIC 624 includes a signal processing section 160. The CPU 622 includes a control section 180.

The imaging element 110 includes pixels 120, transferring sections 144, charge/voltage converting sections 146, charge expelling section 148, amplifying sections 149, output sections 150, high potential sections 152, and signal lines 154. Each pixel 120 includes a color filter 140 and a photoelectric converting section 142. In Fig. 9, as an example, three pixels 120, transferring sections 144, charge/voltage converting sections 146, charge expelling section 148, amplifying sections 149, output sections 150, high potential sections 152, and signal lines 154 are shown in the imaging element 110. However, the number of pixels 120 and the like in the imaging element 110 is not limited to three.

A color filter 140 having a spectral characteristic is provided near each photoelectric converting section 142. Each photoelectric converting section 142 generates charge according to the amount of light incident thereto via the color filter 140. The photoelectric converting section 142 accumulates charge obtained as the result of a photoelectric conversion. The accumulated charge is electrons, for example.

In this example, a pixel 120-1 (R pixel) and a pixel 120-2 (G pixel) each generate charge according to the amount of light incident thereto via the color filter 140. On the other hand, a correction pixel 122-3 (B pixel) includes a light blocking layer 190 between the color filter 140-3 and the photoelectric converting section 142-3, and therefore does not generate change according to the amount of incident light.

The transferring section 144 is provided between the photoelectric converting section 142 and the charge/voltage converting section 146. The transferring section 144 is a transistor having a gate, a source, and a drain, for example. When a control signal TX is provided to the gate of the transferring section 144 from the drive circuit 170, the transferring section 144 transmits the charge accumulated by the photoelectric converting section 142 to the charge/voltage converting section 146.

The charge expelling section 148 is provided between the high potential section 152 and the charge/voltage converting section 146. In this example, the charge expelling section 148 is a transistor having a gate, a source, and a drain. When a control signal RST is provided to the gate of the charge expelling section 148 from the drive circuit 170, the charge expelling section 148 sets the potential of the charge/voltage converting section 146 to be a potential approximately the same as the potential of the high potential section 152. In this example, the charge expelling section 148 expels the electrons accumulated by the charge/voltage converting section 146.

The amplifying section 149 is provided between the output section 150 and the high potential section 152. In this example, the amplifying section 149 is a transistor having a gate, a source, and a drain. The gate of the amplifying section 149 is electrically connected to the charge/voltage converting section 146. As a result, the amplifying section 149 outputs current to the output section 150 via a voltage obtained by amplifying the voltage of the charge/voltage converting section 146.

The output section 150 is provided between the amplifying section 149 and the signal line 154. In this example, the output section 150 is a transistor having a gate, a source, and a drain. When a control signal SEL is provided to the gate of the output section 150 from the drive circuit 170, the output section 150 outputs current to the signal line 154 via the voltage resulting from the amplification performed by the amplifying section 149. In this way, a signal corresponding to the voltage of the charge/voltage converting section 146 that has been amplified is output as a signal to the signal line 154.

The high potential section 152 is electrically connected to the power supply voltage V_{DD}. The high potential section 152 supplies a high potential to the charge expelling section 148 and the amplifying section 149. This high potential may be any potential that enables performance of the charge expelling operation of the charge expelling section 148 and the amplifying operation of the amplifying section 149.

The charge transferred from the transferring sections 144 is accumulated in the charge/voltage converting section 146. In this example, the charge/voltage converting section 146 is a so-called floating diffusion region. The charge/voltage converting section 146 may be a capacitor that has one end electrically connected to the outputs of the transferring sections 144 and the other end grounded. The charge transferred from the transferring sections 144 is accumulated at the other end of the charge/voltage converting section 146. As a result, the accumulated charge is converted into a potential by the charge/voltage converting section 146. The potential of the gate of the amplifying section 149 is equal to the potential at the one end of the charge/voltage converting section 146.

Signals from the output sections 150 are output to the signal lines 154. In this example, pixel signals from the output section 150-1 of the pixel 120-1 (R pixel) and the output section 150-2 of the pixel 120-2 (G pixel) are output respectively to the signal lines 154-1 and 154-2. On the other hand, a signal corresponding to the voltage level corresponding to the dark current is output from the output section 150-3 of the correction pixel 122-3 (B pixel) to the signal line 154-3. The signal lines 154 are connected to the signal processing section 160 via a CDS circuit and an AD conversion circuit, for example.

A signal corresponding to the charge amount resulting from the photoelectric conversion by the pixel 120 is output to the signal processing section 160. Furthermore, a signal corresponding to the dark current detected by the correction pixel 122 is output to the signal processing section 160. The signal processing section 160 uses the signal corresponding to the dark current as the voltage reference level. Using the voltage reference levels generated by a plurality of the correction pixels 122 as correction data, the signal processing section 160 corrects the signals output from a plurality of the pixels 120.

Using the signals output from a plurality of pixels 120 adjacent to each correction pixel 122, the signal processing section 160 generates the signal at the position of each correction pixel 122 through interpolation. The interpolation method used by the signal processing section 160 may be an interpolation method according to a median process, an interpolation method based on the gradient, or an adaptive color plane interpolation method.

The drive circuit 170 supplies a signal pulse to the gates of the transferring sections 144, the charge expelling section 148, and the output section 150. In this way, the transistors of the transferring sections 144, the charge expelling section 148, and the output section 150 are turned ON.

The control section 180 controls the drive circuit 170. Specifically, the control section 180 controls the transferring sections 144, the charge expelling section 148, and the output section 150 by controlling the timing at which the pulse is supplied to the gates of the transferring sections 144, the charge expelling section 148, and the output section 150. The control section 180 also controls operation of the signal processing section 160.

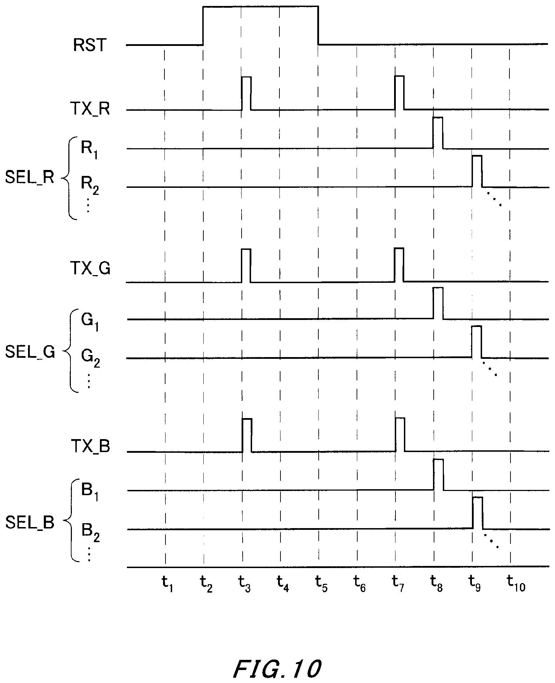

Fig. 10 is a timing chart showing the operation of a pixel block 112. For one pixel block 112, the drive circuit 170 controls the transferring sections 144 and the charge expelling section 148 connected to the correction pixels 122 and the pixels 120 at the same timings. It should be noted that, concerning the correction pixels 122 and the pixels 120 provided with filters having the same spectral characteristic, the drive circuit 170 causes the pixel signals to be output from the output sections 150 while shifting the timing for each pixel.

For example, at the time t2, the drive circuit 170 turns ON each charge expelling section 148 (RST) of the one pixel block 112. As a result, the potential of the gate of each amplifying section 149 is reset. During the period from the time t2 to the time t5, the drive circuit 170 holds the transistor of each charge expelling section 148 (RST) in the ON state.

At the time t3, the drive circuit 170 turns ON the transferring sections 144 (TX_R, TX_G, and TX_B) of all of the pixels 120 and correction pixels 122 (R pixels, G pixels, and B pixels) in the one pixel block 112. As a result, first, the charge accumulated in each pixel 120 is expelled.

At the time t5, the drive circuit 170 turns OFF each charge expelling section 148 (RST). After this, at the time t7, the drive circuit 170 again turns ON the transferring sections 144 (TX_R, TX_G, and TX_B) of all of the pixels 120 and correction pixels 122 (R pixels, G pixels, and B pixels) in the one pixel block 112. As a result, the charges accumulated in all of the photoelectric converting section 142 (R pixels, G pixels, and B pixels) in the one pixel block 112 are transferred respectively to the corresponding charge/voltage converting sections 146-1, 146-2, and 146-3.

During the period from the time t3 to the time t7, all of the pixels 120 (R pixels, G pixels, and B pixels) in the one pixel block 112 accumulate charge. In other words, the period from the time t3 to the time t7 is the charge accumulation time of each pixel 120.

From the time t8, the drive circuit 170 sequentially turns ON the transferring section 144 of each pixel 120 and correction pixel 122. In this example, at the time t8, the charges accumulated in one photoelectric converting section 142-1 (R pixel), one photoelectric converting section 142-2 (G pixel), and one photoelectric converting section 142-3 (B pixel) in the one pixel block 112 are transferred respectively to the signal lines 154-1, 154-2, and 154-3.

At the time t9, the charges accumulated in another photoelectric converting section 142-1 (R2 pixel), another photoelectric converting section 142-2 (G2 pixel), and another photoelectric converting section 142-3 (B2 pixel) in the one pixel block 112 are transferred respectively to the signal lines 154-1, 154-2, and 154-3. This transfer operation is performed for all of the pixels 120 and correction pixels 122 in the one pixel block 112. As a result, the pixel signals of all of the pixels included in the one pixel block 112 are output to the respective signal lines 154.

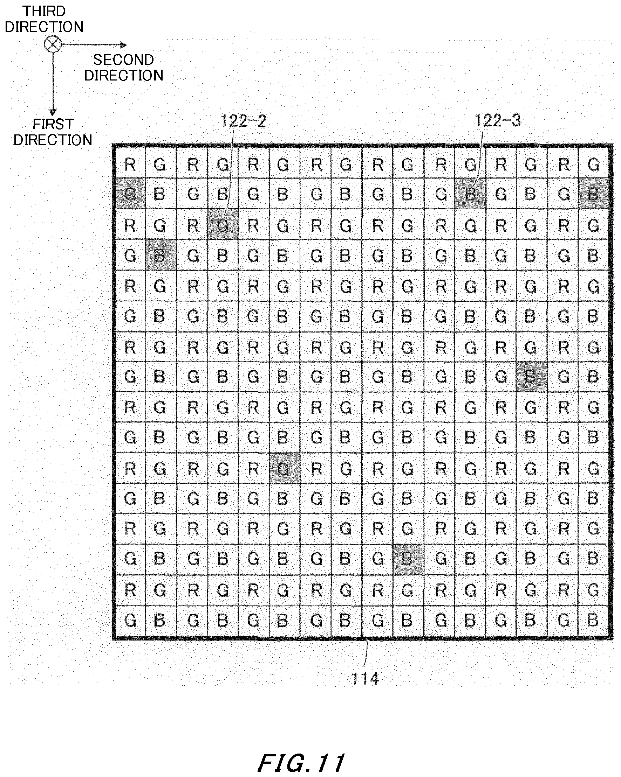

Fig. 11 shows the partial region 114 of a pixel block 112 according to a fifth embodiment. The partial region 114 includes a plurality of correction pixels 122. In the partial region 114, each correction pixel 122 is arranged at a random position. In the partial region 114, correction pixels 122 having red filters are correction pixels 122-1, correction pixels 122 having green filters are correction pixels 122-2, and correction pixels 122 having blue filters are correction pixels 122-3.

As described above, the partial region 114 is provided in a pixel block 112 of the photoelectric converting region 111 of the imaging element 110. Therefore, in the same manner as the partial region 114 in this example, the correction pixels 122 in each pixel block 112 are arranged randomly.

The pattern of the correction pixels 122 that are randomly arranged is preferably different between two pixel blocks 112. Specifically, the correction pixels 122 are arranged randomly throughout the entire photoelectric converting region 111 of the imaging element 110. As a result, it is possible to restrict the alias signals generated when the arrangement pattern of the correction pixel 122 is provided periodically.

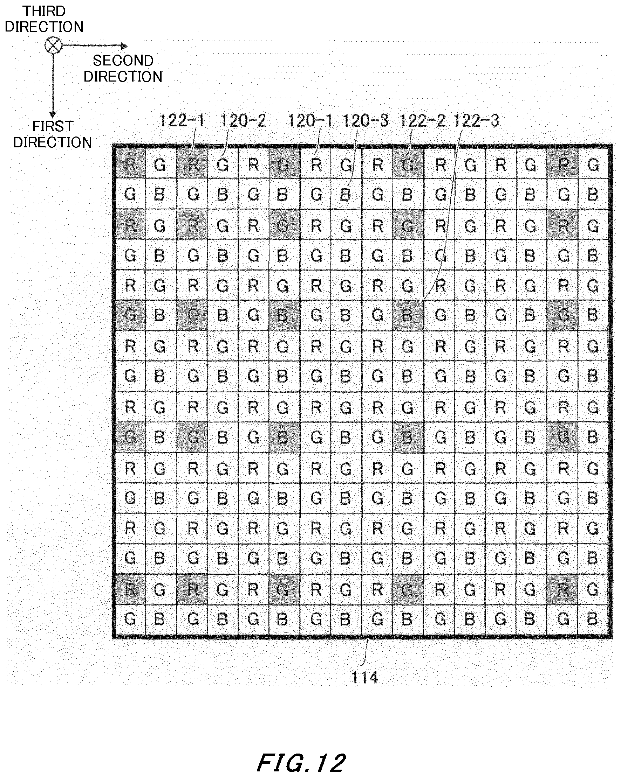

Fig. 12 shows the partial region 114 of a pixel block 112 according to a sixth embodiment. The partial region 114 includes a plurality of correction pixels. In the partial region 114, a plurality of correction pixels 122 are arranged along a plurality of lines parallel to the first direction and a plurality of correction pixels 122 are arranged along a plurality of lines parallel to the second direction, which is perpendicular to the first direction. In this example, the correction pixels 122 are arranged at intervals of 1, 2, 3, and 4 pixels, 1, 2, 3, and 4 pixels, 1, 2, 3, and 4 pixels, etc. in the first direction and arranged at intervals of 1, 2, 3, and 4 pixels, 1, 2, 3, and 4 pixels, 1, 2, 3, and 4 pixels, etc. in the second direction.

Here, the intervals of the plurality of lines parallel to the first direction on which the correction pixels 122 are arranged are not constant, and the intervals of the plurality of lines parallel to the second direction on which the correction pixels 122 are arranged are not constant. As described above, the partial region 114 is provided in a pixel block 112 of the photoelectric converting region 111 of the imaging element 110. Therefore, in the same manner as the partial region 114 in this example, the correction pixels 122 in each pixel block 112 are arranged randomly.

The arrangement pattern of the correction pixels 122 according to the present embodiment is preferably the same in at least two pixel blocks 112. Furthermore, it is more preferable that the same arrangement pattern be used for the correction pixels 122 throughout the entire photoelectric converting region 111 of the imaging element 110. When the correction pixels 122 are arranged according to a specified pattern, alias signals will definitely be generated. However, in Fig. 12, by providing the arrangement pattern for the correction pixels 122 throughout the entire photoelectric converting region 111, compared to a case where an arrangement pattern with the same intervals is provided throughout the entire photoelectric converting region 111, it is possible to restrict the strength of the generated alias signals.

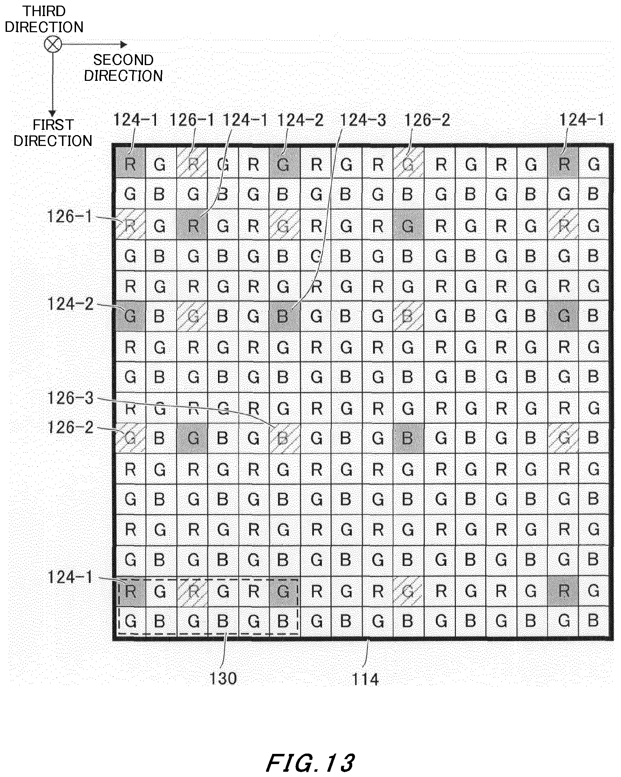

Fig. 13 shows the partial region 114 of a pixel block 112 according to a seventh embodiment. This example differs from the example shown in Fig. 12 by using a plurality of correction pixels 124 and a plurality of correction pixels 126 instead of the plurality of correction pixels 122. The region 130 surrounded by dotted lines in the lower left portion of the partial region 114 is described further below.

It should be noted that each correction pixel 124 includes a photoelectric converting section 142 and the charge thereof resulting from the photoelectric conversion is not read as a signal. Furthermore, the correction pixels 126 do not include photoelectric converting section 142.

In this example, a plurality of correction pixels 124 and a plurality of correction pixels 126 are arranged in an alternating manner in the first direction. A plurality of correction pixels 124 and a plurality of correction pixels 126 are also arranged in an alternating manner in the second direction, which is perpendicular to the first direction. The correction pixels 124 and the correction pixels 126 may be arranged randomly.

As described above, the partial region 114 is provided in a pixel block 112 of the photoelectric converting region 111 of the imaging element 110. Therefore, in the same manner as the partial region 114 in this example, the correction pixels 124 including the photoelectric converting section 142 and the correction pixels 126 that do not include photoelectric converting section 142 in each pixel block 112 are arranged randomly.

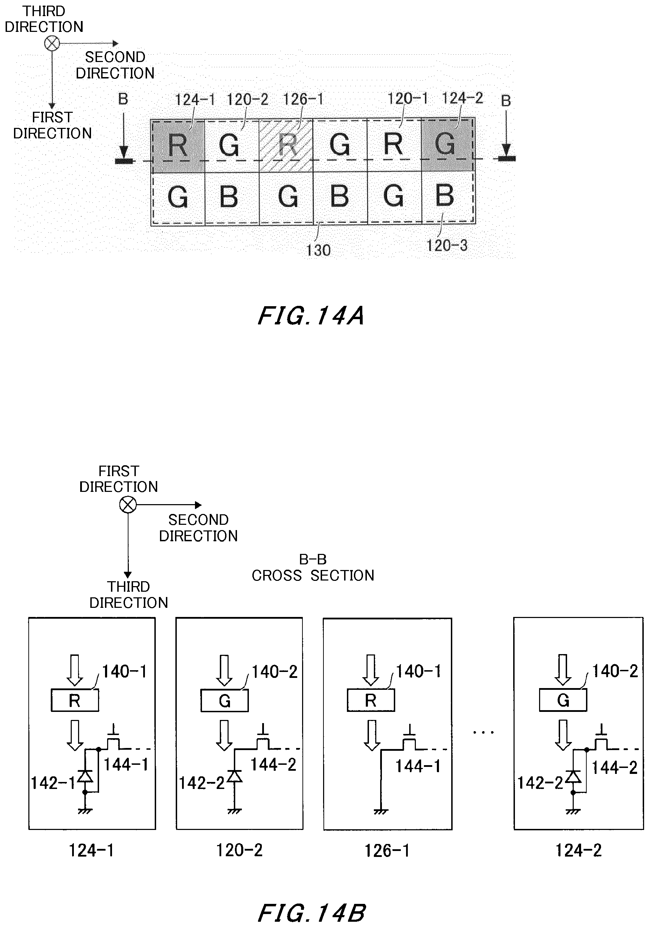

Fig. 14A is an enlarged view of the region 130. The region 130 includes a correction pixel 124-1 having a red filter, a correction pixel 124-2 having a green filter, correction pixels 126-1 having a red filter, and pixels 120-1, 120-2, and 120-3.

The position where the imaging element 110 is cleaved parallel to the second direction through a correction pixel 124-1, a pixel 120-2, a correction pixel 126-1, and a correction pixel 124 is shown by B-B.

Fig. 14B is a schematic view of the correction pixels 124 and correction pixels 126 in the B-B cross section. The correction pixels 124-1 and 124-2 and the correction pixel 126-1 are specific examples of the correction pixels 122. The pixel 120-2 is a so-called normal pixel that is used to output a pixel signal obtained through photoelectric conversion.

In the correction pixel 124-1, the output of the photoelectric converting section 142-1 is connected to the input of the photoelectric converting section 142-1. For the correction pixel 124-2 as well, the output of the photoelectric converting section 142-2 is connected to the input of the photoelectric converting section 142-2. Other than forming a short circuit between the photoelectric converting section 142 and the transferring section 144, the transferring sections 144, the charge/voltage converting sections 146, the charge expelling section 148, the amplifying sections 149, the output sections 150, the high potential sections 152, and the signal lines 154 shown in Fig. 9 are provided in the same manner as in the example of Fig. 9.

Accordingly, charge caused by the photoelectric conversion performed by the photoelectric converting section 142 of the correction pixels 124-1 and 124-2 is basically not accumulated. Even if charge were to be accumulated in a photoelectric converting section 142, this charge would not be read as a pixel signal. The charge caused by the dark current is accumulated in the charge/voltage converting sections 146. Accordingly, it is possible to correct for the dark current using the correction pixels 124.

The correction pixel 126-1 does not include a photoelectric converting section 142. In other words, one end of the transferring section 144 is connected to a ground potential. In the same manner as the correction pixels 124, it is possible to correct for the dark current using the correction pixel 126.

Since the correction pixels 124 and correction pixels 126 are provided in the photoelectric converting region 111, it is possible to detect the dark current without using light blocking layers 190. Since the light blocking layers 190 are not provided in the photoelectric converting region 111, the flatness of the photoelectric converting region 111 can be improved.

While the embodiments of the present invention have been described, the technical scope of the invention is not limited to the above described embodiments. It is apparent to persons skilled in the art that various alterations and improvements can be added to the above-described embodiments. The embodiments added with such alterations or improvements can be included in the technical scope of the invention, which is set out in the claims.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### List of Reference Numerals

10: imaging element, 11: photoelectric converting region, 14: partial region, 16: pixel unit, 18: microlens, 20: pixel, 22: correction pixel, 24: pixel region, 30: pixel region, 32: first quadrant pixel, 34: second quadrant pixel, 36: third quadrant pixel, 38: fourth quadrant pixel, 39: circuit section, 40: color filter, 42: photoelectric converting section, 44: transferring section, 46: charge/voltage converting section, 48: charge expelling section, 49: amplifying section, 50: output section, 52: high potential section, 54: signal line, 60: signal processing section, 70: drive circuit, 80: control section, 90: light blocking layer, 110: imaging element, 111: photoelectric converting region, 112: pixel block, 114: partial region, 120: pixel, 122: correction pixel, 124: correction pixel, 126: correction pixel, 130: region, 140: color filter, 142: photoelectric converting section, 144: transferring section, 146: charge/voltage converting section, 148: charge expelling section, 149: amplifying section, 150: output section, 152: high potential section, 154: signal line, 160: signal processing section, 170: drive circuit, 180: control section, 190: light blocking layer, 200: imaging element section, 340: shutter unit, 410: optical axis, 400: single-lens reflex camera, 500: lens unit, 550: lens mount, 600: camera body, 620: body substrate, 622: CPU, 624: image processing ASIC, 634: back surface display section, 650: finder, 652: focusing screen, 654: pentaprism, 656: finder optical system, 660: body mount, 670: mirror box, 672: main mirror, 674: sub mirror, 680: focusing optical system, 682: focal point detection sensor

## Claims

1. An imaging element (10) comprising:
a plurality of microlenses (18);
a plurality of the pixels (20) provided to correspond to each of the plurality of microlenses (18) and including pixels (20-1) having photoelectric converting sections (42) that photoelectrically convert light incident thereto via a first filter having a first spectral characteristic, pixels (20-2) having photoelectric converting sections (42) that photoelectrically convert light incident thereto via a second filter having a second spectral characteristic, and pixels (20-3) having photoelectric converting sections (42) that photoelectrically convert light incident thereto via a third filter having a third spectral characteristic, wherein the pixels (20-1) having the first spectral characteristic, the pixels (20-2) having the second spectral characteristic, and the pixels (20-3) having the third spectral characteristic are each arranged to be adjacent to pixels having the same spectral characteristics provided to correspond to adjacent microlenses (18), and
one pixel among each set of pixels having the same spectral characteristic and arranged adjacent to each other (24-1, 24-2, 24-3) is replaced with a correction pixel (22),
the correction pixels (22) being pixels provided to correspond to at least two of the microlenses (18) and generating correction data that does not depend on the amount of incident light, and
wherein
the correction pixels are not adjacent to each other in two adjacent microlenses among the plurality of microlenses.

2. The imaging element (10) according to Claim 1, wherein
the microlenses (18) are arranged in a first direction and a second direction that is perpendicular to the first direction,
four pixels (20) arranged in a 2×2 formation in the first direction and the second direction are provided to correspond to each microlens (18),
pixels (20-1) having the first spectral characteristic and pixels (20-3) having the third spectral characteristic are provided on one diagonal in each set of four pixels, and
two pixels (20-2) having the second spectral characteristic are provided on the other diagonal in each set of four pixels.

3. The imaging element (10) according to Claim 1 or 2, further comprising:
a signal processing section (60) that corrects a signal output from at least one of the pixels (20-1) having the first spectral characteristic, the pixels (20-2) having the second spectral characteristic, and the pixels (20-3) having the third spectral characteristic, using the correction data generated by the correction pixel (22).

4. The imaging element (10) according to Claim 3, wherein
the signal processing section (60) generates through interpolation a signal at a position of each correction pixel (22), using signals output from at least two pixels among the pixels (20-1) having the first spectral characteristic, the pixels (20-2) having the second spectral characteristic, and the pixels (20-3) having the third spectral characteristic that are adjacent to the correction pixel (22).

5. The imaging element (10) according to any one of Claims 1 to 4, wherein
the correction pixels (22) are arranged at random positions satisfying the first and second conditions, wherein
the first condition is that correction pixels (22) are not adjacent to each other in two adjacent microlenses (18) among the plurality of microlenses (18),
the second condition is that only one pixel among pixels having the same spectral characteristic and arranged adjacent to each other is a correction pixel (22).

6. The imaging element (10) according to any one of Claims 1 to 4, wherein
the correction pixels (22) are arranged along a plurality of lines parallel to a first direction,
intervals of the lines parallel to the first direction on which the correction pixels (22) are arranged are not constant,
the correction pixels (22) are arranged along a plurality of lines parallel to a second direction, and
intervals of the lines parallel to the second direction on which the correction pixels are arranged are not constant.

7. The imaging element (10) according to any one of Claims 1 to 6, wherein
a charge/voltage converting section (46) that receives charge accumulated in photoelectric converting sections (42) and converts the charge into a potential is provided in common to the pixel (20-1) having the first spectral characteristic, the pixel (20-2) having the second spectral characteristic, and the pixel (20-3) having the third spectral characteristic provided to correspond to at least one microlens (18).

8. The imaging element (10) according to any one of Claims 1 to 6, wherein
four pixels having the same spectral characteristic and provided to correspond to adjacent microlenses (18) are arranged adjacent to each other, and
in each set of four adjacent pixels, a charge/voltage converting section (46) that receives charge accumulated in each photoelectric converting section (42) and converts the charge into a potential is provided in common to the four pixels.

9. An imaging apparatus (400) comprising:
the imaging element (10) according to any one of Claims 1 to 8.

## Patentansprüche

1. Bildelement (10) aufweisend:
eine Mehrzahl von Mikrolinsen (18);
eine Mehrzahl von Pixeln (20), die so angeordnet sind, dass sie jeweils zu der Mehrzahl der Mikrolinsen (18) korrespondieren, und die aufweisen: Pixel (20-1), die photoelektrische Umwandlungsabschnitte (42) aufweisen, die Licht, das auf diese einfällt, photoelektrisch konvertieren mittels eines ersten Filters, der eine erste spektral Eigenschaft hat; Pixel (20-2), die photoelektrische Umwandlungsabschnitte (42) aufweisen, die Licht, das auf diese einfällt, photoelektrisch konvertieren mittels eines zweiten Filters, der eine zweite spektrale Eigenschaft hat, und Pixel (20-3), die photoelektrische Umwandlungsabschnitte (42) haben, die Licht, das auf diese einfällt, photoelektrisch konvertieren mittels eines dritten Filters, der eine dritte spektral Eigenschaft hat,
wobei
die Pixel (20-1), die die erste spektrale Eigenschaft haben, die Pixel (20-2), die die zweite spektrale Eigenschaft haben, und die Pixel (20-3), die die dritte spektrale Eigenschaft haben, jeweils so angeordnet sind, dass sie zu Pixeln benachbart sind, die die gleiche spektrale Eigenschaft haben, und so angeordnet sind, dass sie zu benachbarten Mikrolinsen korrespondieren (18), und
ein Pixel aus jedem Set von Pixeln, die die gleiche spektral Eigenschaft haben und zueinander benachbart angeordnet sind (24-1, 24-2, 24-3), durch einen Korrekturpixel (22) ersetzt wird, wobei die Korrekturpixel (22) Pixel sind, die so angeordnet sind, dass sie zu mindestens zwei der Mikrolinsen (18) korrespondieren und Korrekturdaten erzeugen, die nicht von der Menge des einfallenden Lichts abhängen, und wobei bei zwei benachbarten Mikrolinsen aus der Mehrzahl von Mikrolinsen die Korrekturpixel nicht benachbart zueinander angeordnet sind.

2. Bildelement (10) nach Anspruch 1, wobei
die Mikrolinsen (18) in einer ersten Richtung und in einer zweiten Richtung, die senkrecht zu der ersten Richtung ist, angeordnet sind,
vier Pixel (20) in einer 2x2 Formation in der ersten Richtung und der zweiten Richtung so angeordnet sind, dass sie zu den Mikrolinsen (18) korrespondieren,
Pixel (20-1), die die erste spektrale Eigenschaft haben, und Pixel (20-3), die die dritte spektrale Eigenschaft haben, bei jedem Set der vier Pixel (20) auf einer Diagonale angeordnet sind, und
zwei Pixel (20-2), die die zweite spektrale Eigenschaft haben, in jedem Set der vier Pixel (20) auf der anderen Diagonale angeordnet sind.

3. Bildelement (10) nach einem der Ansprüche 1 oder 2, ferner aufweisend:
einen Signalverarbeitungsabschnitt (60), der ein Ausgangssignal von mindestens einem der Pixel (20-1), die die erste spektrale Eigenschaft haben, der Pixel (20-2), die die zweite spektrale Eigenschaft haben, und der Pixel (20-3), die die dritte spektrale Eigenschaft haben, korrigiert unter Verwendung der Korrekturdaten, die mittels des Korrekturpixels (22) erzeugt werden.

4. Bildelement (10) nach Anspruch 3, wobei
der Signalverarbeitungsabschnitt (60) mittels Interpolation ein Signal erzeugt an einer Position jedes Korrekturpixels (22) unter Verwendung von Signalen, die von mindestens zwei Pixeln aus den Pixeln (20-1), die die erste spektrale Eigenschaft haben, den Pixeln (20-2), die die zweite spektrale Eigenschaft haben, und den Pixeln (20-3), die dritte spektrale Eigenschaft haben, und die benachbart zu dem Korrekturpixel (22) sind.

5. Bildelement (10) nach einem der Ansprüche 1 bis 4, wobei die Korrekturpixel (22) an willkürlichen Positionen angeordnet sind, die eine erste Bedingung und eine zweite Bedingung erfüllen, wobei
die erste Bedingung ist, dass die Korrekturpixel (22) zweier benachbarter Mikrolinsen (18) unter der Mehrzahl von Mikrolinsen (18) nicht zueinander benachbart sind, und
die zweite Bedingung ist, dass nur ein Pixel unter den Pixeln, die die gleiche spektrale Eigenschaft haben und die benachbart zueinander angeordnet sind, ein Korrekturpixel (22) ist.

6. Bildelement (10) nach einem der Ansprüche 1 bis 4, wobei
die Korrekturpixel (22) entlang einer Mehrzahl von Linien angeordnet sind, die parallel zu einer ersten Richtung sind,
Intervalle der Linien, die parallel zu der ersten Richtung sind, entlang der die Korrekturpixel (22) angeordnet sind, nicht konstant sind,
die Korrekturpixel (22) entlang eine Mehrzahl von Linien angeordnet sind, die parallel zu einer zweiten Richtung sind, und
Intervalle der Linien, die parallel zu der zweiten Richtung sind, entlang der die Korrekturpixel (22) angeordnet sind, nicht konstant sind.

7. Bildelement (10) nach einem der Ansprüche 1 bis 6, wobei
ein Ladung/Spannung-Umwandlungsabschnitt (46), der eine Ladung empfängt, die in den photoelektrischen Umwandlungsabschnitten (42) akkumuliert ist, und der die Ladung in ein Potenzial umwandelt, gemeinsam angeordnet ist für die Pixel (20-1), die die erste spektrale Eigenschaft haben, die Pixel (20-2), die die zweite spektrale Eigenschaft haben, und die Pixel (20-3), die die dritte spektrale Eigenschaft haben, und die so angeordnet sind, dass sie zu mindestens einer der Mikrolinsen (18) korrespondieren.

8. Bildelement (10) nach einem der Ansprüche 1 bis 6, wobei
vier Pixel, die die gleiche spektrale Eigenschaft haben und die so angeordnet sind, dass sie zu benachbarten Mikrolinsen (18) korrespondieren, benachbart zueinander angeordnet sind, und
bei jedem Set von vier benachbarten Pixeln ein Ladung/Spannung-Umwandlungsabschnitt (46), der die Ladung, die in jedem photoelektrischen Umwandlungsabschnitt (42) akkumuliert ist, empfängt und die Ladung in ein Potenzial umwandelt, für die vier Pixel gemeinsam bereitgestellt ist.

9. Bildaufnahmevorrichtung (400) aufweisend:
das Bildelement (10) nach einem der Ansprüche 1 bis 8.

## Revendications

1. Élément d'imagerie (10) comprenant :
une pluralité de microlentilles (18) ;
une pluralité de pixels (20) disposés de façon à correspondre à chacune de la pluralité de microlentilles (18) et comprenant des pixels (20-1) comportant des sections de conversion photoélectrique (42) qui convertissent de façon photoélectrique la lumière incidente sur ceux-ci par l'intermédiaire d'un premier filtre ayant une première caractéristique spectrale, des pixels (20-2) comportant des sections de conversion photoélectrique (42) qui convertissent de façon photoélectrique la lumière incidente sur ceux-ci par l'intermédiaire d'un deuxième filtre ayant une deuxième caractéristique spectrale, et des pixels (20-3) comportant des sections de conversion photoélectrique (42) qui convertissent de façon photoélectrique la lumière incidente sur ceux-ci par l'intermédiaire d'un troisième filtre ayant une troisième caractéristique spectrale, dans lequel
les pixels (20-1) ayant la première caractéristique spectrale, les pixels (20-2) ayant la deuxième caractéristique spectrale, et les pixels (20-3) ayant la troisième caractéristique spectrale sont chacun agencés de façon à être adjacents à des pixels ayant les mêmes caractéristiques spectrales disposés de façon à correspondre à des microlentilles adjacentes (18), et
un pixel parmi chaque ensemble de pixels ayant la même caractéristique spectrale et agencés de façon adjacente les uns aux autres (24-1, 24-2, 24-3) est remplacé par un pixel de correction (22), les pixels de correction (22) étant des pixels disposés de façon à correspondre à au moins deux des microlentilles (18) et générant des données de correction qui ne dépendent pas de la quantité de lumière incidente, et dans lequel les pixels de correction ne sont pas adjacents les uns aux autres dans deux microlentilles adjacentes parmi la pluralité de microlentilles.

2. Élément d'imagerie (10) selon la revendication 1, dans lequel
les microlentilles (18) sont agencées dans une première direction et une deuxième direction qui est perpendiculaire à la première direction,
quatre pixels (20) agencés dans une formation 2x2 dans la première direction et la deuxième direction sont disposés de façon à correspondre à chaque microlentille (18),
des pixels (20-1) ayant la première caractéristique spectrale et des pixels (20-3) ayant la troisième caractéristique spectrale sont disposés sur une diagonale dans chaque ensemble de quatre pixels, et
deux pixels (20-2) ayant la deuxième caractéristique spectrale sont disposés sur l'autre diagonale dans chaque ensemble de quatre pixels.

3. Élément d'imagerie (10) selon la revendication 1 ou 2, comprenant en outre :
une section de traitement de signal (60) qui corrige une sortie de signal provenant d'au moins un des pixels (20-1) ayant la première caractéristique spectrale, des pixels (20-2) ayant la deuxième caractéristique spectrale, et des pixels (20-3) ayant la troisième caractéristique spectrale, en utilisant les données de correction générées par le pixel de correction (22).

4. Élément d'imagerie (10) selon la revendication 3, dans lequel
la section de traitement de signal (60) génère par interpolation un signal à une position de chaque pixel de correction (22), en utilisant les signaux émis par au moins deux pixels parmi les pixels (20-1) ayant la première caractéristique spectrale, les pixels (20-2) ayant la deuxième caractéristique spectrale, et les pixels (20-3) ayant la troisième caractéristique spectrale qui sont adjacents au pixel de correction (22).

5. Élément d'imagerie (10) selon l'une quelconque des revendications 1 à 4, dans
lequel les pixels de correction (22) sont agencés à des positions aléatoires satisfaisant aux première et deuxième conditions, où
la première condition est que les pixels de correction (22) ne soient pas adjacents les uns aux autres dans deux microlentilles adjacentes (18) parmi la pluralité de microlentilles (18),
la deuxième condition est qu'un seul pixel parmi les pixels ayant la même caractéristique spectrale et agencés de façon adjacent les uns aux autres est un pixel de correction (22).

6. Élément d'imagerie (10) selon l'une quelconque des revendications 1 à 4, dans lequel
les pixels de correction (22) sont agencés le long d'une pluralité de lignes parallèles à une première direction,
les intervalles des lignes parallèles à la première direction sur laquelle les pixels de correction (22) sont agencés ne sont pas constants,
les pixels de correction (22) sont agencés le long d'une pluralité de lignes parallèles à une deuxième direction, et
les intervalles des lignes parallèles à la deuxième direction sur laquelle les pixels de correction sont agencés ne sont pas constants.

7. Élément d'imagerie (10) selon l'une quelconque des revendications 1 à 6, dans lequel
une section de charge/conversion de tension (46) qui reçoit une charge accumulée dans les sections de conversion photoélectrique (42) et convertit la charge en potentiel est disposée en commun sur le pixel (20-1) ayant la première caractéristique spectrale, le pixel (20-2) ayant la deuxième caractéristique spectrale, et le pixel (20-3) ayant la troisième caractéristique spectrale disposés de façon à correspondre à au moins une microlentille (18).

8. Élément d'imagerie (10) selon l'une quelconque des revendications 1 à 6, dans lequel
quatre pixels ayant la même caractéristique spectrale et disposés de façon à correspondre à des microlentilles adjacentes (18) sont agencés de façon adjacente les uns aux autres, et
dans chaque ensemble de quatre pixels adjacents, une section de charge/conversion de tension (46) qui reçoit la charge accumulée dans chaque section de conversion photoélectrique (42) et convertit la charge en potentiel est disposée en commun sur les quatre pixels.

9. Appareil d'imagerie (400) comprenant :
l'élément d'imagerie (10) selon l'une quelconque des revendications 1 à 8.
